# EUROPEAN PATENT APPLICATION

(11) **EP 1 809 075 A1**
(43) Date of publication of application: **18.07.2007**
(21) Application number: 06000601.2
(22) Date of filing: 12.01.2006
(51) Int. Cl.: H05B 7/085, H05B 7/14, F16B 39/30

(54) **Threaded pin, carbon electrode, and electrode assembly**

(71) Applicant: SGL Carbon AG, 65203 Wiesbaden (DE)
(72) Inventor: Montminy, John, 85757 Karlsfeld (DE)

(57) **Abstract**

The invention relates to a to carbon electrodes having at least one socket with an internal thread to be mated with a threaded pin having at least one external thread and to such threaded pin for connecting such carbon electrodes, wherein said internal thread or external thread is provided with non-load bearing abutment thread windings.

Further, the invention relates to an electrode assembly with a threaded connection, comprising an electrode and a pin.

## Description

### TECHNICAL FIELD

The invention relates to a threaded pin for connecting carbon electrodes having at least one socket with an internal thread, said pin having a central axis running along its length, two ends, a midplane lying between said two ends and at least one external thread.
Further, the invention relates to a carbon electrode having at least one socket with an internal thread to be mated with a threaded pin.
Further, the invention relates to an electrode assembly with a threaded connection, comprising an electrode and a pin.

### BACKGROUND ART

Carbon electrodes, especially graphite electrodes, are used in the steel industry to melt metals in electrothermal furnaces like arc furnaces, where electric current is passed through the electrode forming an arc between the electrode and the metal to generate the heat necessary to melt the metal. The electric arc and the high temperatures in the furnace, which may be up to 1500°C or even higher, cause the lower end of the electrode, which extends into the furnace in close proximity to the molten metal, to be slowly consumed. Therefore, generally a series of electrodes is joined to form an electrode column which is advanced progressively into the furnace. To compensate for the shortening of the electrode column further electrodes are screwed onto the top end of the column.

The electrodes are joined into said columns via a pin (sometimes referred to as a nipple) connecting the ends of adjoining electrodes. The pin usually has the form of two opposed male threaded ends which may have a cylindrical or conical shape. The pin is screwed into mating threaded sockets provided at both ends of the electrodes.

The pin is usually threaded firmly into one of the sockets of the electrode before shipping it to a customer. To avoid loosening of the pin due to vibrations and the like, the pin must be threaded firmly into the socket, leaving no clearances between thread flanks. This assembly of a pin threaded into the socket of the electrode is usually referred to as a monotrode, and the socket with the pin is referred to as a monotroded socket or a pre-set socket. For use in a furnace, the monotroded socket is joined to another electrode by screwing the protruding portion of the pin into its exposed socket to build a column.

When a furnace is in use, currents in excess of 100.000 A as well as flexing moments are exerted repeatedly on the electrode column due to the oscillation of the furnace casing. The column is also subjected to constant vibrations or impacts from the charge material, which may also place stress on the pin. The extreme mechanical, electrical and thermal stresses exerted on the pin may cause cracks in the pin and, more commonly, splitting in the upper monotroded socket, usually in the lower electrode column joint. This splitting in the upper monotroded socket of the lower electrode column joints is caused by the temperature gradients combined with the differing coefficients of thermal expansion (CTE) of the pin and the electrode. This is especially true, if the pin is screwed firmly into the socket for transportation. Because the faces of threads of the pin and of the monotroded socket are in full contact movement of the pin threads relative to the socket threads, and vice-versa, is inhibited leading to high internal hoop stresses in the socket. This problem is exacerbated, particularly as the joint approaches the hot metal bath in a furnace, where the temperature gradients are highest.

To avoid these undesired effects, the pin may be slightly unscrewed from the monotroded socket such that the threads are not fully engaged. In this constellation, only half of the faces of threads of the pin and of the monotroded socket are in contact, eventually bearing the full load of the electrode column.
In order to prevent the partially engaged pin from being fully unscrewed from the monotroded socket, plastic pins are usually inserted into bores extending from the socket face of the electrode into the pin. Thus, clearances between the internal threads of the monotroded socket and the external threads of the pin are provided to allow a different CTE growth of the pin with respect to the monotroded socket. However, the procedure to center and fix the pin into a socket prior to shipment to the customer is cumbersome, time consuming, and highly dependent on the skill of the operator. Also, during transportation, the plastic pins are often not sufficient to restrain a nipple in a monotroded socket, and thread damage may result. This damage can leave internal debris in the monotroded socket which prevents proper tightening when the electrode is added to the furnace. Loosening may then progress to the point where electrode-to-electrode end-face contact is lost, which leads to an increase in the electrical resistance of the connection. More electrical current is then channelled through the connecting pin leading to localized overheating. As a result, the lower end of the electrode column may break off and fall into the molten steel, which interrupts the electric arc and terminates the smelting process.

Alternatively, metal or plastic pieces may be glued on the threads of the pin and/or the monotroded socket. This process is usually referred to as "tabbing". The pin may then be screwed firmly into the monotroded socket for transportation and it is not necessary to loosen the pin from the monotroded socket prior to connecting the pin with a further electrode. In the furnace, the tabbing material on the threads melts away such that clearances are maintained between the internal threads of the monotroded socket and the external threads of the pin to allow for different CTE growths of the pin and monotroded socket. However, it is cumbersome to mount the tabbing pieces and difficult to obtain clearances of defined dimensions.

Furthermore, as the dimensions of carbon electrodes and connecting pins for arc furnaces are highly standardized in order to ensure interchangeability of electrodes and pins from various manufacturers, a solution is required that omits design changes to prior art electrodes and pins.

### SUMMARY OF THE INVENTION

it is accordingly an object of the invention to provide a threaded pin for carbon electrodes, a carbon electrode and an electrode assembly with a threaded pin which overcome the above-mentioned disadvantages of the known devices and methods and which provide for a threaded connection that will prevent loosening and cracking.

With the foregoing and other objects in view, there is provided, in accordance with the invention, a threaded pin and a carbon electrode, having non-load bearing abutment thread windings integrated into their threads.
The non-load bearing abutment thread windings on the pin provide for a defined abutment to position the pin with regard to a socket of a prior art electrode. Likewise, the non-load bearing abutment thread windings in the electrode socket provide for a defined abutment to position a prior art pin with regard to the electrode socket.
Hence, it is not possible to firmly screw a pin into an electrode such that the thread faces are in full contact. Moreover, the abutment thread windings of the pin or of the electrode come in contact with corresponding thread windings of a prior art electrode or prior art pin such that open clearances are provided between the internal thread of the electrode and the external thread of the pin. This prevents the pin threads from fully engaging the socket threads during setting in the finishing department prior to shipping of a monotroded socket. These open clearances, which were previously only possible by special means, such as with the afore-mentioned pinning or tabbing of the pin, allow CTE growth of the pin with respect to the monotroded socket. Consequently, the occurrence of socket splits in the threaded connection, which can lead to full length splits, body breaks, and loosening in the joint, is reduced. In addition, a monotroded socket, i. e. a pin screwed into the socket of an electrode, is still stable during transportation and handling as the forces exerted on the protrusion of the pin are sufficient to prevent loosening of the pin. Further, hoop stresses in the monotroded socket are alleviated, which further helps to minimize the formation of splits. Furthermore, this invention omits design changes to prior art electrodes and pins as a pin according to this invention can be used to connect (monotrode) prior art electrodes or an electrode according to this invention can be connected (monotroded) by prior art pins.

When an electrode is monotroded by inserting a pin prior to shipment, it is known to measure a so called "pin gauge protrusion". This is a measure of how deeply seated the pin is in the electrode socket; that is, how far the pin protrudes outside of the socket as measured from the flat electrode endface with respect to a reference point on the pin using a pin gauge. This pin gauge protrusion is, at least indirectly, an indication of how far the pin will insert into a non-monotroded socket when assembled on an arc furnace. The total distance that the pin will insert into the non-monotroded socket of an electrode then depends on the monotroded socket tolerances, the tolerances of the monotroded end of the pin, the tolerances of the non-monotroded end of the pin and the non-monotroded socket tolerances.

The non-load bearing abutment thread windings at the thread of the pin or of the electrode according to the present invention ensure that the monotroded end of the pin will only insert a certain distance into the monotroded socket, and that there is clearance between the pin threads and socket threads. The pin gauge protrusion being exclusively determined by the non-load bearing abutment thread windings of the pin or of the electrode has consequently a relatively small variation. Therefore, pin gauge protrusion variation can roughly be cut in half by the invention. Moreover, the variation of the distance with that the non-monotroded end of the pin will insert into a non-monotroded socket on an electrode can be minimized (by half), as well. The net result is that the assembled electrode joint variation is lower by about half.

In this application, the term "pin midplane" is defined as the region where the two ends of the pin meet, irrespective of a possible different size of the two ends, i.e., the midplane of the threaded pin is not necessarily the geometric center with respect to the overall length or structure of the pin.

In a preferred embodiment of the invention, at least one of said pin ends, preferably both ends, comprising said thread is/are conical in shape to facilitate the screwing into the electrode sockets and to improve the engagement. Usually thus the pin is provided with bi-conical external threads.

According to this invention, the non-load bearing abutment thread windings of the pin are provided at both pin ends at the thread area adjacent to the pin midplane. These non-load bearing abutment thread windings comprise up to 30% of the thread windings of each pin end.

According to a preferred embodiment of this invention, the non-load bearing abutment thread windings of the pin are provided at one pin end only. This pin end is the one designated to monotrode an electrode.

According to this invention, the non-load bearing abutment thread windings of the electrode are provided at both electrode sockets at the thread area adjacent to the socket bottom. These non-load bearing abutment thread windings comprise up to 30% of the thread windings at each socket.
According to a preferred embodiment of this invention, the non-load bearing abutment thread windings of the electrode are provided at one electrode socket only. This electrode socket is the one designated to be monotroded by a pin.

According to a preferred embodiment of this invention, the final non-load bearing abutment thread winding is followed by one single thread winding having no contact to the mating threads. This non-contact thread winding acts as a buffer zone between the non-load bearing abutment thread windings and the (conventional) load-bearing thread windings to prevent thermomechanical stress.

The present invention further is directed to an electrode assembly with a threaded connection comprising an electrode made from a carbon material with a socket having an internal thread, a socket bottom and a central axis running along its length, with the assembly further comprising a pin made from a carbon material and having an external thread for connecting two electrodes, two ends and a central axis running along its length, wherein either said electrode or said pin have non-load bearing abutment thread windings at their threads, which, when the pin is screwed into the socket, come in contact with corresponding thread faces of the mating pin or electrode prior to one of said pin ends reaching the bottom of the corresponding socket.

This contact of the non-load bearing abutment thread windings of the inventive pin or electrode with the corresponding (conventional) thread windings of the mating electrode or pin coincides with the contact of the remaining (conventional) thread windings of the inventive pin or electrode with the corresponding (conventional) thread windings of the mating electrode or pin, eventually bearing the load of the electrode column.

Again, the defined abutment of the pin and the socket prior to one pin end reaching the socket bottom provides for open gaps or clearances between the internal thread of the socket and the external thread of the pin. These open clearances in turn allow for CTE growth of the pin with respect to the monotroded socket, thereby minimizing the risk of splits and the possibility of subsequent breaks in the pin, socket, or body.

It is preferred, to make both the electrode and the pin of synthetically produced carbon or graphite. This material imparts the property of plastic deformability. Therefore, the crests of a thread winding made from synthetically produced carbon or graphite do not simply break off but may be deformed. This further minimizes the likelihood of splits in the pin or the corresponding socket of an electrode.

The internal thread of an electrode socket and the external thread of a pin usually have thread windings with a substantially uniform pitch, a root, a crest and a substantially V-shaped profile. To provide for an approximately equal share of the load transferred between the two thread windings, it is preferred that at least one of said internal and external threads is formed with a wedge ramp at said root and that the crests of at least the other of said internal and external threads abut with said wedge ramps, when said pin is screwed into said socket. In a conventional threaded connection the top thread winding usually carries the largest load on its flank. The thread winding immediately below is subjected to a smaller load and the further thread windings below have to bear yet smatter loads. As a consequence, only a few thread windings participate in the transfer of loads. These higher stresses in the first thread windings may cause splitting of the pin and/or the socket. In contrast to that, when the crests of one thread winding abuts with the wedge ramps of the other thread winding, an approximately equal share of the load is transferred by all of the thread windings. With the pin or electrode provided with non-load bearing abutment thread windings according to this invention, the above-mentioned modified thread form may be used in the monotroded socket more easily, because the counter-forces ensure that proper contact between the standard threads and the wedge ramps is maintained during transportation, etc., prior to adding the monotroded electrode to an electrode to form an electrode column.

The invention will now be described in detail with reference to preferred embodiments and the drawings. All features described and/or illustrated in the drawings form the subject matter of the invention, independently of their inclusion or combination in the claims.

### BRIEF DESCRIPTION OF THE DRAWINGS

- Fig. 1A/B: shows a pin and a longitudinal section of an electrode prior to monotroding (joining),
- Fig. 2A/B: shows a longitudinal section of two prior art electrodes joined by a prior art pin and a detailed view of the joint area,
- Fig. 3A/B: shows a longitudinal section of two prior art electrodes joined by a pin according to the invention and a detailed view of the joint area,
- Fig. 4: shows a detailed longitudinal section of the socket of an electrode according to the invention monotroded by a prior art pin,
- Fig. 5A/B: shows a detailed longitudinal section of two different threaded connections between an electrode and a pin. In Fig. 5A, load vectors are drawn on the flanks of the thread windings, while in Fig. 5B these load vectors are applied to the wedge ramps on the roots of the thread windings,
- Fig. 6: shows a detailed longitudinal section of the socket of a prior art electrode monotroded by a pin according to one embodiment of the invention.

### DETAILED DESCRIPTION OF THE PREFERRED EMBODIMENTS

In the drawings, electrodes 1, 2 are schematically depicted, each having two sockets 3 and 4. The electrodes 1, 2 are coaxially fixed by a connecting pin 5 being screwed into the sockets 3, 4. The electrodes 1, 2 and the connecting pin 5 are made from a carbon material, preferably graphite.

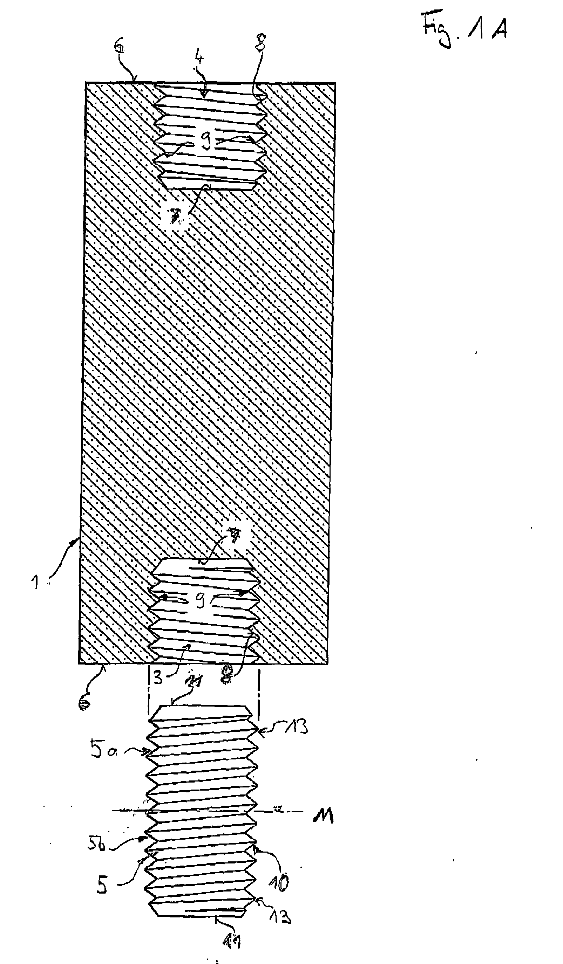

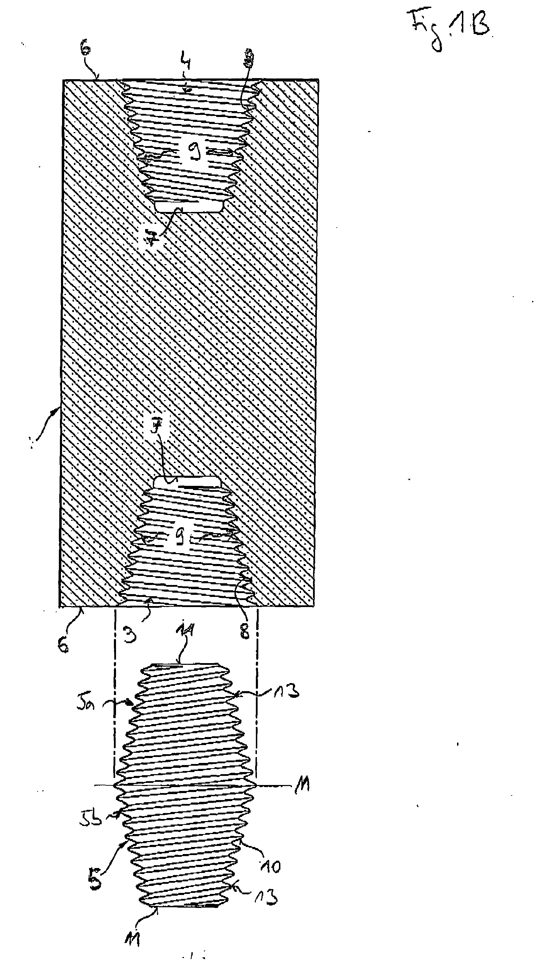

Fig. 1A and Fig. 1B provide a general view of arrangements of an electrode 1 and a connecting pin 5 prior to monotroding.
The coaxially arranged sockets 3, 4 of electrode 1 are recessed into both electrode endfaces 6. Each socket 3, 4 has a socket bottom 7 and is furnished with internal threads 8 having (conventional) thread windings 9. The connecting pin 5 has external threads 10 and possess flat endfaces 11 on either side.
The (lower) socket 3 is also referred to as "monotroded socket" in the figures.
The connecting pin 5 has the form of two opposed male threaded ends 5a and 5b which may have a cylindrical (Fig. 1A) or conical external threads 10 (Fig. 1B). Accordingly, sockets 3, 4 have a cylindrical (Fig. 1A) or conical internal threads 8 (Fig. 1B). The (upper) pin end 5a is also referred to as "monotroded pin end" in the figures.
The two pin ends 5 a,b meet at the pin midplane M, irrespective of a possible different size of the two pin ends 5 a,b, i.e., the midplane M of the threaded pin 5 is not necessarily the geometric center with respect to the overall length or structure of the pin 5.

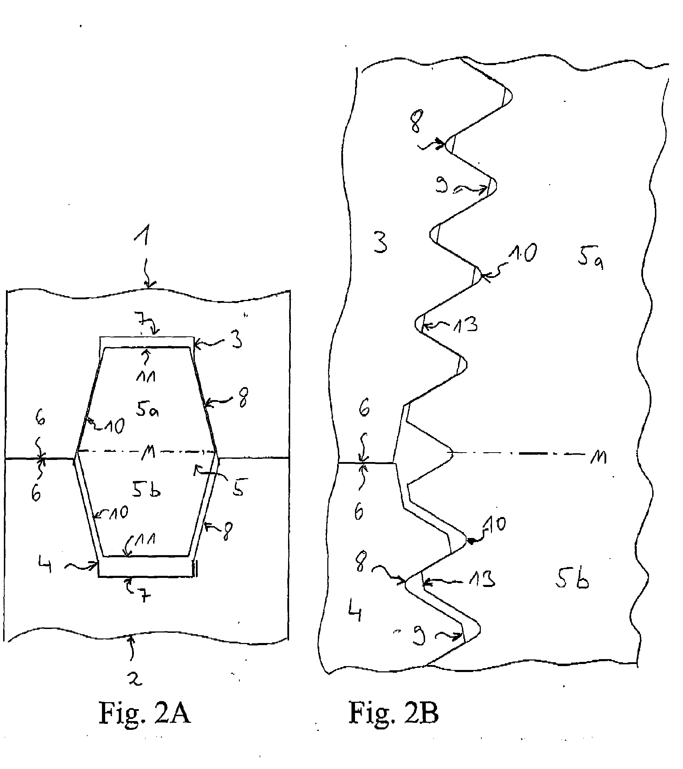

Fig. 2A shows the joint of a prior art electrode column consisting of electrodes 1, 2 joined together by pin 5. The connecting pin 5 is a standard connecting pin having two conical end portions 5a, 5b and a midplane M lying between the two end portions. Conical external threads are provided on each of the two end portions 5a, 5b, which engage with internal threads of the sockets 3, 4. Electrode 1 was initially montroded with (prior art) pin 5 by screwing pin 5 with its threaded end 5a firmly into the socket 3 for transportation. As shown in Fig. 2B, both pin ends 5a, b are provided exclusively with standard (conventional) thread windings 13. The faces of the pin thread 10 at its threaded end 5a of the and of the monotroded socket 3 are in full contact so that different CTE growth of the pin 5 and the socket 3 leads to cracks and other afore-mentioned problems. Further, the pin midplane M is displaced and the pin gauge protrusion with respect to the end-face 6 of the monotroded socket 3 is reduced.

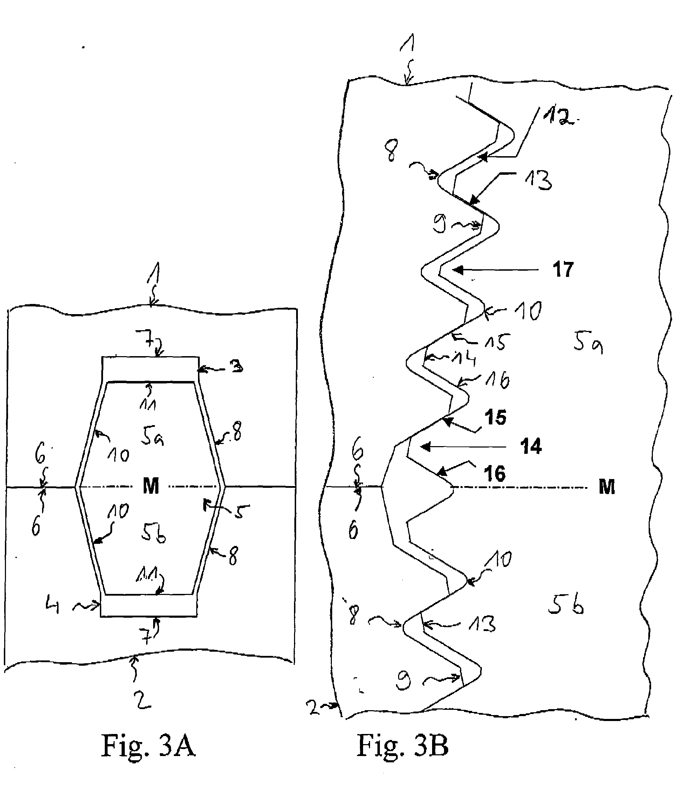

Fig. 3A shows the joint of an electrode column according to this invention consisting of prior art electrodes 1, 2 joined together by a pin 5 according to this invention. The connecting pin 5 is a standard connecting pin, with regard to its geometry, having two conical end portions 5a, 5b and a midplane M lying between the two end portions. Conical external threads 10 are provided on each of the two end portions 5a, 5b, which engage with internal threads 8 of the sockets 3, 4. Socket 3 of electrode 1 was initially montroded by screwing pin 5 with its threaded end 5a firmly into it. As shown in Fig. 3B, the external thread 10 of the lower pin end 5b has exclusively standard (conventional) thread windings 13, whereas the upper (monotroded) pin end 5a is additionally equipped with non-load bearing abutment thread windings 14 adjacent to the pin midplane M having abutment faces 15 facing towards pin endface 11.

According to this invention, the non-load bearing abutment thread windings 14 of the pin 5 are provided at both pin ends 5 a,b at the thread area adjacent to the pin midplane M. According to a preferred embodiment of this invention (Fig. 3B), the non-load bearing abutment thread windings 14 of the pin 5 are provided at one pin end 5a only. This pin end 5a is the one designated to monotrode an electrode 1, 2.

The non-load bearing abutment thread windings 14 comprise up to 30% of the thread windings of a pin end 5 a,b, depending on the length of the pin 5 and the diameter of the electrode 1, 2.
The thread windings 14 are shaped and positioned in relation to the (conventional) thread windings 13 of the pin 5 such that they provide non-load bearing abutment faces 15 abutting with the thread windings 9 of the monotroded socket 3.
This non-load bearing contact of the abutment thread windings 14 of the inventive pin 5 with the corresponding (conventional) thread 8 of the mating electrode 1 coincides with the engagement of the standard thread windings 13 of the inventive pin 5 with the thread windings 9 of the mating electrode 1, eventually bearing the load of the electrode column.
Thus, clearances 12 between the internal threads 8 of the monotroded socket 3 and the external threads 10 of the pin 5 are provided to allow for different CTE growths of the pin 5 and the monotroded socket 3.
The non-load bearing abutment thread windings 14 may have the same shape as the (conventional) thread windings 13 to simplify the machining procedures. Other shapes of the thread windings 14 including non-flat abutment faces 14 are within the scope of this invention. It is, however, important that the not abutting faces 16 of thread winding 14 are not in contact with the thread 8 of the mating electrode to provide a clearance 12. It is a preferred embodiment of this invention, that the non-load bearing abutment thread windings 14 are followed by one single thread winding 17 having no contact to the internal threads 8 of the monotroded socket 3. This non-contact thread winding 17 acts as a buffer zone between the non-load bearing abutment thread windings 14 and the (conventional) thread windings 13 to prevent thermomechanical stress. The non-contact thread winding 17 may have a shape similar to the thread windings 13 or 14, yet somewhat reduced in size, to simplify machining. It may also be completely machined off, i.e. leaving a spare space instead of a winding flank.
As shown in Fig 3A, the location of the pin midplane M coincides according to this invention with the plane of the flat endface 6 of the (monotroded) electrode 1 and, eventually, with the flat endface 6 of the connected (non-monotroded) electrode 2. The pin gauge protrusion is thus correct and the threaded joint clearance 11 between the internal thread 8 of the (non-monotroded) socket 4 of electrode 2 and the external thread 10 of the pin end 5b of pin 5 is provided to allow CTE growth of pin 5 within socket 4 of electrode 2 without causing further thermomechanical stresses in the pin or the socket.

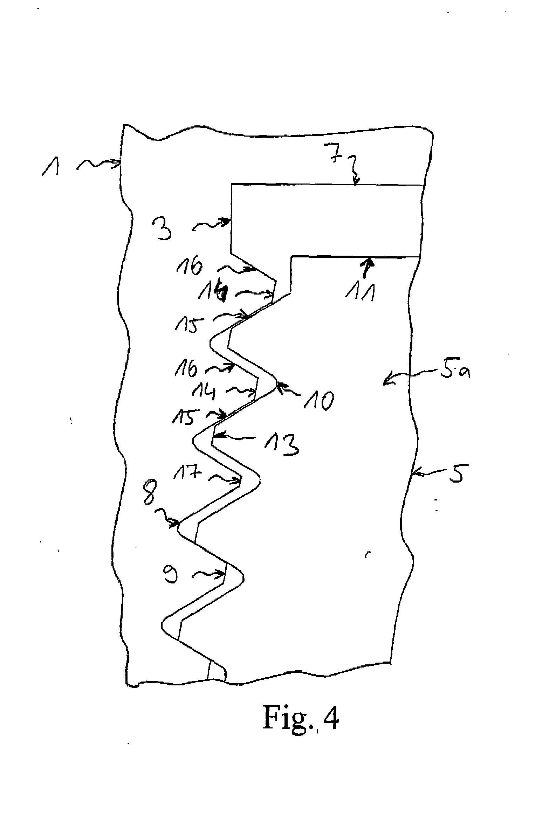

Fig. 4 shows the socket 3 of an electrode 1 according to the invention monotroded with a (conventional) pin 5. The external thread 10 of both pin ends 5 a, b has exclusively standard (conventional) thread windings 13,
The monotroded socket 4 has standard (conventional) thread windings 9 and is additionally equipped with non-load bearing abutment thread windings 14 adjacent to the socket bottom 7 having abutment faces 15 facing towards electrode endface 6.

According to this invention, the non-load bearing abutment thread windings 14 of electrode 1, 2 are provided at both sockets 3, 4 at the thread area adjacent to the socket bottom 7. According to a preferred embodiment of this invention, the non-load bearing abutment thread windings 14 of electrode 1, 2 are provided at one socket 3 only. This socket 3 is the one designated to be monotrode by a (conventional) pin 5.
The non-load bearing abutment thread windings 14 comprise up to 30% of the thread windings of a socket 3, 4, depending on the length of the pin 5 and the diameter of the electrode 1, 2.

As further shown in Fig. 4, the non-load bearing contact of the abutment thread windings 14 of the inventive electrode 1 with the corresponding (conventional) thread 9 of the mating electrode 1 coincides with the engagement of the standard thread windings 13 of pin 5 with the (conventional) thread windings 10 of electrode 1, eventually bearing the load of the electrode column.
Further, thread 9 of electrode 1 is provided with a non-contact thread winding 17 acting as a buffer zone between the non-load bearing abutment thread windings 14 and the (conventional) thread windings 10 to prevent thermomechanical stress.

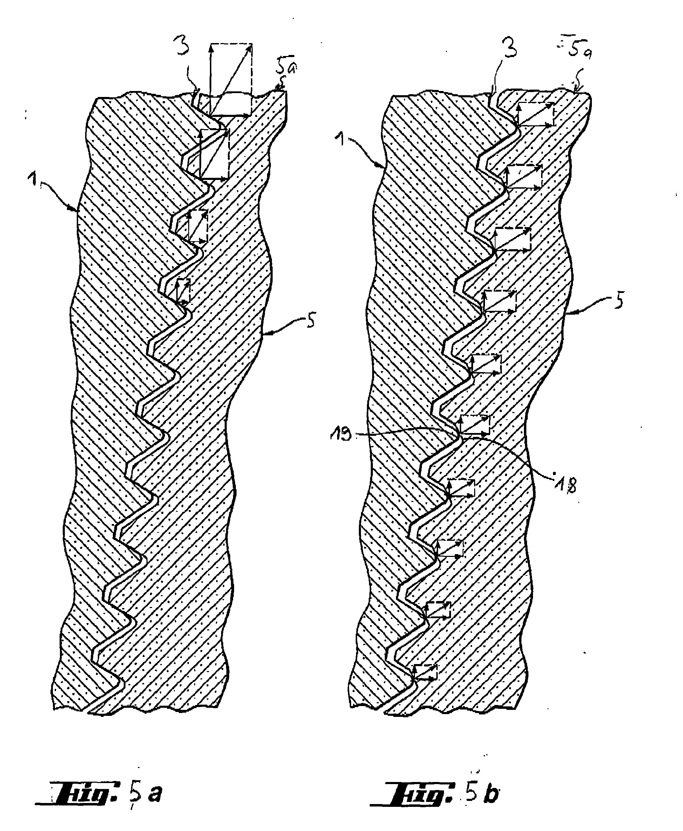

Fig. 5 A, B illustrates the improved transfer of mechanical loads by comparison of a traditional threaded connection (Fig. 5A) with a threaded connection between an electrode 1 and a pin 5 according to patent application EP 1 528 840 A1 (Fig. 5B). Particularly the load vectors drawn on the flanks of the pin thread windings 13 clarify the differences.
The threads 8, 12 of electrodes 1, 2 and pin 5 have windings 9, 13 with a substantially uniform pitch, a root, a crest 19 and a substantially V-shaped profile. In the traditional threaded connection, see Fig. 5A, the top thread winding 13 has the largest load vector on its flank. The thread winding 13 immediately below is subjected to a smaller load vector, the thread winding 13 below that has a yet smaller load, and so on. The bottom thread windings 13 barely participate in the transfer of loads from electrode 1 to pin 5.

According to EP 1 528 840 A1 one of the threads 8, 12 is formed with wedge ramps 18 at the root of windings 9, 13 and the crests 19 of the mating thread windings 9, 13 abut with said wedge ramps 18 when pin 5 is screwed into socket 3, 4. In the threaded connection between an electrode 1 and a pin 5 according to patent application EP 1 528 840 A1, see Fig. 5B, the load vectors drawn on the wedge ramps 18 on the roots of the thread windings 13 are of practically equal size for all wedge ramps 18. This means that an approximately equal share of the load is transferred at each contact face from the crest 19 of the thread winding 9 of electrode 1 to the wedge ramp 18 on the root of the thread winding 13 of pin 5.

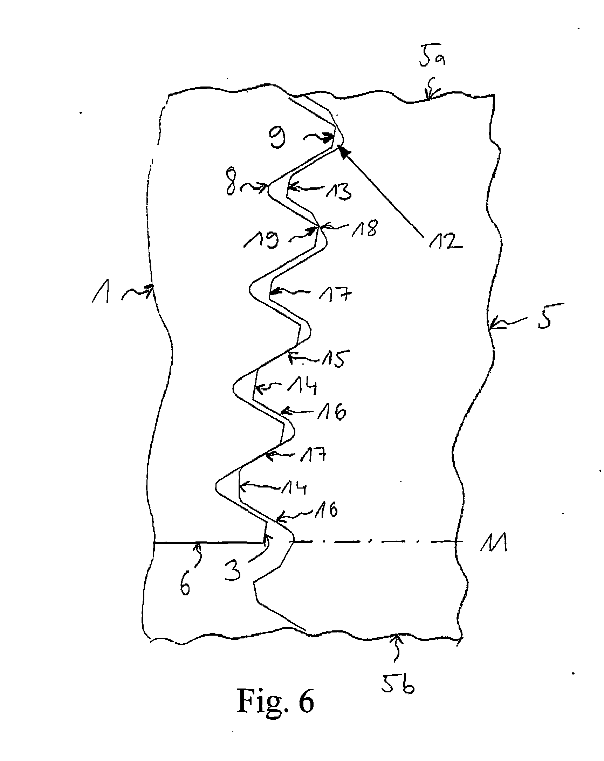

Fig. 6 shows the socket 3 of a conventional electrode 1 monotroded with a pin 5 having a thread 12 formed accroding to EP 1 528 840 A1 with wedge ramps 18 at the root of windings 13 where the crests 19 of the mating electrode thread windings 9 abut with said wedge ramps 18 when pin 5 is screwed into socket 3. According to this invention, thread 12 further comprises non-load bearing abutment thread windings 14 and preferably a non-contact thread winding 17. Hence, it is shown that the invention can be also applied to novel thread designs without being limited to traditional threads.

### KEY TO FIGURES

- 1: (upper) electrode
- 2: (lower) electrode
- 3: (monotroded) socket
- 4: (non-monotroded) socket
- 5: connecting pin
- 5a: (monotroded) end of pin 5
- 5b: pin end of pin 5
- 6: electrode endface
- 7: socket bottom
- 8: internal (socket) thread
- 9: (conventional) socket thread windings
- 10: external (pin) thread
- 11: pin endface
- 12: threaded joint clearance
- 13: (conventional) thread windings of pin 5
- 14: abutment thread windings of pin 5
- 15: abutment face of thread winding 13
- 16: not abutting face of thread winding 13
- 17: non-contact thread winding
- 18: Wedge ramp
- 19: Crest of thread windings
- M: pin midplane

## Claims

1. A threaded electrode (1, 2) with two electrode endfaces (6) and two sockets (3, 4) with a socket bottom (7) and internal threads (8), said electrode (1, 2) having a central axis running along its length, wherein said internal thread (8) is provided with non-load bearing abutment thread windings (14) having abutment faces (15) facing towards electrode endfaces (6).

2. The electrode (1, 2) according to claim 1, wherein the internal thread (8) of only one of the two sockets (3, 4) is provided with non-load bearing abutment thread windings (14).

3. The electrode (1, 2) according to claims 1 or 2, wherein up to 30% of the windings of internal thread (8) are non-load bearing abutment thread windings (14).

4. The electrode (1, 2) according to one of the claims 1 to 3, wherein the non-load bearing abutment thread windings (14) are provided at the thread (8) area adjacent to the socket bottom (7).

5. A threaded pin (5), especially for connecting carbon electrodes (1, 2) having two sockets (3, 4) with an internal thread (8), said pin (5) having a central axis running along its length, two endfaces (11), two end portions (5a, 5b), a midplane (M) lying between said two end portions (5a, 5b) and at least one external thread (10), wherein said external thread (10) is provided with non-load bearing abutment thread windings (14) having abutment faces (15) facing towards pin endfaces (11).

6. The pin (5) according to claim 5, wherein the external thread (10) of only one of the two end portions (5a, 5b) is provided with non-load bearing abutment thread windings (14).

7. The pin (5) according to claims 5 or 6, wherein up to 30% of the windings of external thread (10) are non-load bearing abutment thread windings (14).

8. The pin (5) according to one of the claims 5 to 7, wherein the non-load bearing abutment thread windings (14) are provided at the thread (10) area adjacent to the pin midplane (M).

9. The electrode (1,2) or pin (5) according to one of the above claims, wherein the non-load bearing abutment thread windings (14) are followed by one non-contact thread winding (17).

10. The electrode (1,2) or pin (5) according to one of the above claims, wherein the thread windings (9, 13) of the threads (8, 10) have a substantially uniform pitch, a root, a crest (19) and a substantially V-shaped profile, and wherein at least one of said internal and external threads (8, 10) is formed with a wedge ramp (18) at said root, said crests (19) of at least the other of said internal and external threads (8, 10) abut with said wedge ramps (18), when said pin (5) or electrode (1,2) is screwed into each other.

11. The electrode (1,2) or pin (5) according to one of the above claims, wherein said electrode (1,2) or pin (5) are made of carbon or graphite.

12. The electrode (1,2) or pin (5) according to one of the above claims, wherein the internal threads (8) and the external threads (10) have a conical shape.

13. A pre-set of an electrode (1,2) according to to one of the claims 1 to 4, 9 to 12, wherein the electrode (1,2) is monotroded with a prior art pin (5) at a socket (3,4) provided with non-load bearing abutment thread windings (14) and wherein the pin midplane (M) is aligned with the electrode endface (6) at said socket (3,4).

14. A pre-set of a pin (5) according to one of the claims 5 to 12, wherein one of the sockets (3,4) of a prior art electrode (1,2) is monotroded with the pin end (5a,b) provided with non-load bearing abutment thread windings (14) and wherein the pin midplane (M) is aligned with the electrode endface (6) at said socket (3,4).

15. An electrode assembly comprising pre-sets according to claims 13 or 14 of a pin (5) and an electrode (1,2).
